# EUROPEAN PATENT SPECIFICATION

(11) **EP 3 976 555 B1**
(45) Date of publication and mention of the grant of the patent: **25.01.2023**
(21) Application number: 19742255.3
(22) Date of filing: 31.05.2019
(51) Int. Cl.: C04B 41/89

(54) **CERAMIC PRODUCT HAVING ANTI-SLIP SURFACE**
KERAMISCHES PRODUKT MIT RUTSCHHEMMENDER OBERFLÄCHE
PRODUIT CÉRAMIQUE À SURFACE ANTIDÉRAPANTE

(43) Date of publication of application: 06.04.2022
(73) Proprietor: Decoppo Seramik Teknolojileri A.S., Odunpazari/Eskisehir (TR)
(72) Inventor: KARA, Ferhat, 26555 Tepebasi/Eskisehir (TR)
(74) Representative: Sögüt, Onur Ömer
(86) International application number: PCT/TR2019/050413
(87) International publication number: WO 2020/242402

(56) References cited:
- EP-A1- 2 832 715
- JP-A- H05 105 559

## Description

### Technical Field of the Invention

The present invention relates to an anti-slip surface. The present invention further relates to a composition and method for obtaining an anti-slip surface.

### Background of the Invention

Ceramic tiles are used extensively in indoor and outdoor areas providing hygiene and different aesthetic appearances. The appearances of ceramic tile surfaces can be glossy, satin or matt, each meeting different expectations of customers. One of the most widely used areas of ceramic tiles are in bathrooms, private and industrial kitchens and pools surroundings. In these application areas, slipperiness is a major problem which presents health hazards. While oil spills and fats could be the reason causing slippery floors in kitchens, wet surfaces due to water are the main cause of the slipperiness in bathrooms and pool surroundings. Although using ceramic tiles with matt surface appearance can have lower tendency to slipperiness than satin and glossy surfaces, they are not enough to prevent slipperiness to an extend that is safe for users.

Ceramic tile manufacturers have been trying to tackle the slipperiness problem by following mainly the two routes:
(i) making structured/relieved tiles surfaces during shaping where the surface was geometrically relieved up to several mm height/depth, generally with the help of the mould during pressing
(ii) making pits at the surface of the sintered tile by hydrofluoric acid etching as described in the patents of GB 1117221, US 5698021 and US 5885339 or making micro craters at the surface of the sintered tile by laser pulses as described in US 6167879.
(iii) making rough tile surface by depositing various size grains (from several tens up to several hundred micrometers in size) on or in glaze layer of green tile surface which remains as small hard mounds up to several hundred micrometers after firing as described in JP2576322 B2, CN107382373 A, CN106348791 A,

The first approach (i) described above limits the design possibilities of the tiles and makes tile surface rather uncomfortable, whereas the second approach (ii) needs extra installations in or outside factory which increases the cost and also alters the surface texture and/or design of the original tiles. In the third approach (iii), the tile surface is very rough and coarse and may also cause damage to the skin when fallen on it. In addition, due to the presence of hard mounds, cleaning of the tile surface is rather difficult.

EP 1 705 311 B1 describes a method for producing an anti-slip surface with smooth touch where aqueous or non-aqueous suspension with high surface area (between 50-200 m²/g) colloidal materials including silica and aluminium hydroxide are applied on a green tile surface by spray gun, disc, silk screen or a similar processes. It is reported that using high surface area colloidal material renders the surface substantially rough (Ra =8-12 micron) and thus slip resistant, whereby only static coefficient of friction in wet condition in excess of 0.7 is reported.

JP H05 105559 A discloses an anti-slip tile and its production. EP 2 832 715 A discloses tiles, coatings, and related methods that provide both high cleanability and high slip resistance.

On another front, digital decoration of ceramic tiles in manufacturing has been increasing at a very high paste. Apart from coloured inks, there are also inks available in the market that provide various surface appearances such as matt, satin, glossy, metallic etc. Likewise, there is also an interest in the development of inks that provide anti-slip surface property. Furthermore, development of anti-slip surface with smooth texture would hinder the undesired coarse scale roughness of the current anti-slip surfaces.

### Objects of the Invention

Primary object of the present invention is to eliminate the above-mentioned shortcomings in the present state of the art.

A further object of the present invention is to provide a method for obtaining a product with a high performance anti-slip surface.

A further object of the present invention is to provide a product with a smooth surface having high anti-slip performance.

A further object of the present invention is to provide a product with a smooth and transparent surface showing decreased optical reflection.

An even further object of the present invention is to provide a simple method for obtaining such product.

### Brief Description of the Invention

The present invention proposes a method for obtaining a multi-layered product. The method includes selection of a first composition and a second composition, such that the first composition and second composition show different shrinking behavior at a first interval. This step is followed by placing the first composition and the second composition on top of each other for obtaining a multi-layered structure; which is further followed by progressively heating the multi-layered structure, such that a temperature in the multi-layered structure reaches to a value within said first interval. As a result, a multi-layered product with high-performance anti-slip surface is enabled.

### Brief Explanation of the Figures

The figures brief explanation of which is herewith provided are solely intended for providing a better understanding of the present invention and are as such not intended to define the scope of protection or the context in which said scope is to be interpreted in the absence of the description.
Fig.1 (a) shows scanning electron microscope (SEM) image of a sintered surface of a typical glazed tile without slip resistance after firing (here: at 1200°C). Sample length in the bottom-right corresponds to 100 micrometers.
Fig.1(b) shows SEM image of a buckled anti-slip surface of a multi-layered product according to the present invention, after firing (here: at 1200°C). Sample length in the bottom-right corresponds to 100 micrometers.
Fig.2(a) shows a SEM image of an anti-slip surface of a multi-layered product according to the present invention, wherein the second composition comprises oxide particles for enhancing the surface roughness. Nano-sized oxide particles are clearly visible. Sample length in the bottom-right corresponds to 3 micrometers.
Fig.2(b) shows a SEM image of an anti-slip surface of a multi-layered product according to the present invention, wherein the second layer is provided with drying cracks. Sample length in the bottom-right corresponds to 10 micrometers.
Fig.3 shows a thermal shrinking behavior of a first composition (here: a typical, e.g. matt glaze composition) for being evaluated within the sense of the present invention.
Fig.4 shows comparative thermal shrinking behaviors of three different compositions for being evaluated/benchmarked as a second composition within the sense of the present invention.
Fig.5 shows comparative thermal shrinking behaviors of two different second compositions within the sense of the present invention. The dashed and continuous tracks respectively represent geopolymer-based compositions comprising 50 wt.% and 30 wt.% of alpha-alumina as oxide/hydroxide/salt.
Fig.6 shows comparative thermal shrinking behaviors of a first composition (dashed track, symbolized as (a); here: a matt glaze composition), and a second composition (continuous track, symbolized as (b); here: a geopolymer composition).
Fig.7 shows comparative thermal shrinking behaviors of an exemplary first composition, and an exemplary second composition. Note that the dashed track corresponds to the shrinking behavior of the first composition shown in Fig.3.
Fig.8(a) shows a schematic and partial section view of a multi-layered structure which includes a "continuous" layer of the second composition covering a first composition prior to heating/firing.
Fig.8(b) shows a schematic and partial section view of a multi-layered product obtained by heating the multi-layered structure shown in the Fig.8(a), upon heating up to the first interval.
Fig.9(a) shows a schematic and partial section view of a multi-layered structure which includes a "discontinuous", "patterned" or "discrete" layer of the second composition provided on a first composition in the form of e.g. micron-sized dots, prior to heating/firing.
Fig.9(b) shows a schematic and partial section view of a multi-layered product obtained by heating the multi-layered structure shown in the Fig.9(a), upon heating up to the first interval.
Fig.10(a) to Fig.10(c) are SEM images of an outer surface formed from the second composition in relation to the Example 3, as an exemplary evidence to the buckling due to the plastic deformation of a second layer in the first temperature interval.

### Detailed Description of the Invention

Referring to the figures outlined before, there is disclosed a method for obtaining a multi-layered product (1000). The method includes the following steps:
(i) selection of a first composition (1) and a second composition (2), such that the first composition (1) and second composition (2) show different thermal shrinking behaviors relative to each other at a first interval of temperature, such that the first composition (1) at least partially sinters in said first interval,
(ii) placing the first composition (1) and the second composition (2) on top of each other for obtaining a multi-layered structure (100),
(iii) progressively heating the multi-layered structure (100), such that a temperature in the multi-layered structure (100) reaches to a value within said first interval.

Shrinking behavior as a response to temperature (thermal shrinkage), occurring by reaching to the first interval, results in buckling in the multi-layered product (1000). In the general context of the present invention, either one of the first composition (1) or the second composition (2) can be selected to show a greater extent of thermal shrinkage at the first interval, when compared to the other one thereof.

The first composition (1) can be a substrate (B), which can be a ceramic-based substrate (e.g. a greenware, or a ceramic body), a further layer e.g. a glaze layer, or an intermediate glaze layer between a ceramic-based substrate and a second layer. The substrate can be a ceramic body with or without an engobe layer which can be coated with a glaze layer.

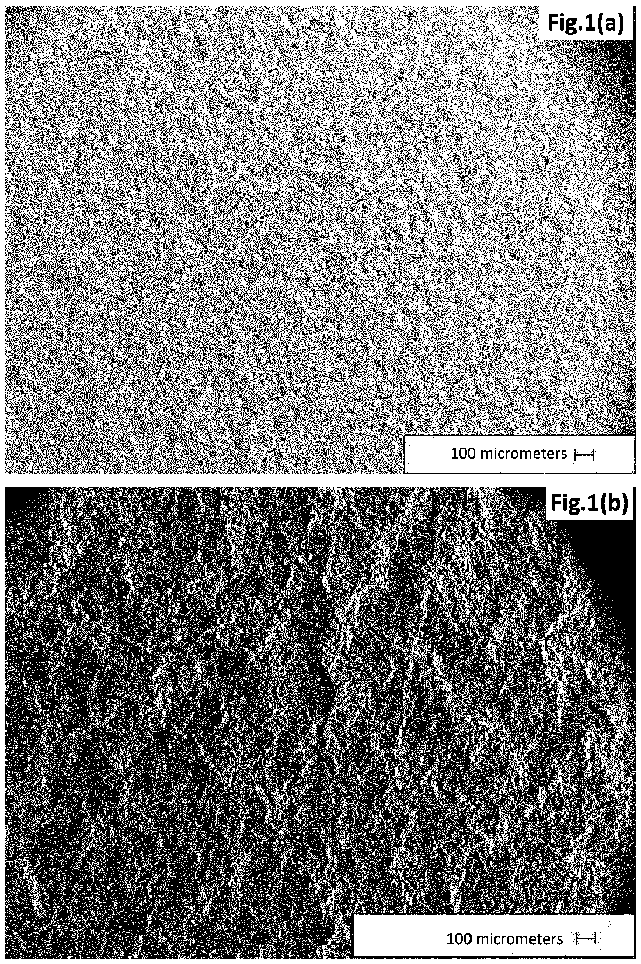

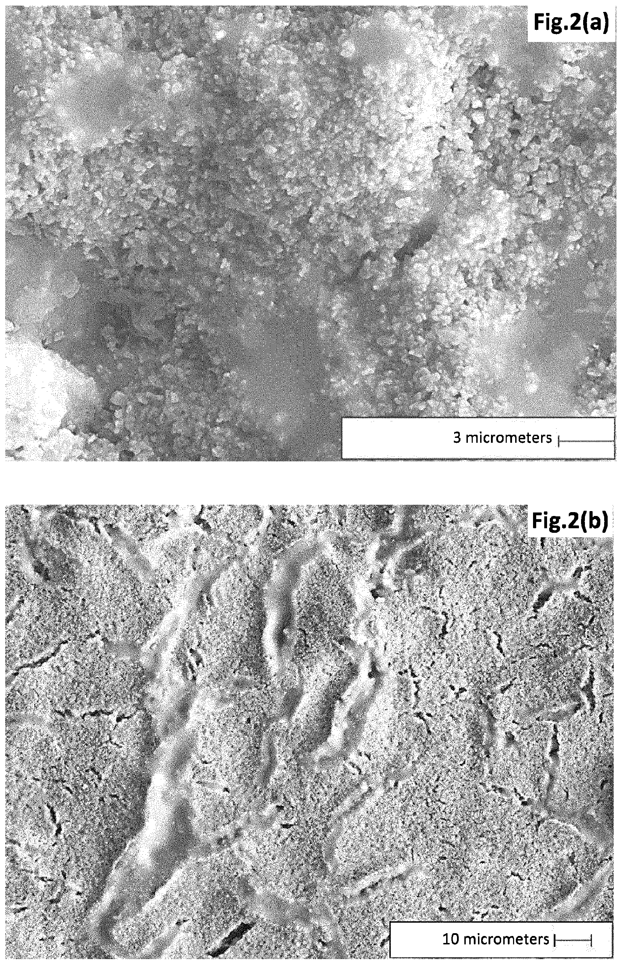

Fig.1 (a) shows SEM image of a sintered surface of a glaze according to prior art ceramics technology after firing (here: at 1200°C). Sample length in the bottom-right corresponds to 100 micrometers. Fig.1(b) shows SEM image of a buckled anti-slip surface of a multi-layered product (1000) according to the present disclosure after firing (here: at 1200°C). Sample length in the bottom-right corresponds to 100 micrometers. Fig.2(a) shows a SEM image of an anti-slip surface of a multi-layered product (1000) according to the present disclosure wherein the second composition comprises oxide particles. Sample length in the bottom-right corresponds to 3 micrometers. Fig.2(b) shows a SEM image of an anti-slip surface of a multi-layered product (1000) according to the present disclosure wherein the second layer is provided with drying cracks. Sample length in the bottom-right corresponds to 10 micrometers. In the context of the present disclosure said shrinking behavior can be a sintering densification, or can be related to sintering densification.

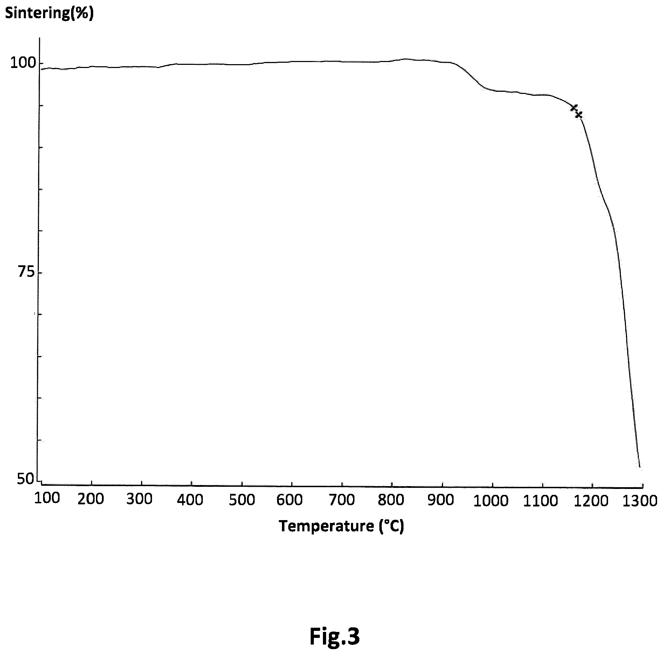

Fig.3 shows a thermal shrinking behavior of a first composition (here: a typical, e.g. matt glaze composition) for being evaluated within the sense of the present disclosure.

Axes of abscissas and ordinates respectively correspond to temperature (in °C), and to a commonly used relative magnitude indicator for thermal shrinkage (here: shown as Sintering(%) as a conventional indice). Sintering(%) shows a momentary extent of a footprint area of a respective first or second composition at a temperature (where sintering (%) is smaller than 100), relative to such footprint area before heating (where sintering (%) is 100); for instance, a Sintering(%) having a value of 65 at a temperature, means that the thermal shrinkage at said temperature is 35% (i.e. an area variation of 35% has occurred due to thermal shrinkage of a respective composition). It can be emphasized that with this exemplary first composition, a slight thermal shrinkage occurs between ca. 920°C and ca. 1150°C; and a sintering-related dramatic thermal shrinkage occurs at temperatures higher than 1160°C. For instance, when this exemplary first composition (a typical glaze composition) is employed, a first interval between 1180°C and 1220°C (a typical sintering temperature for porcelain bodies such as tiles) can be suitable for achieving a buckling or roughening/mounding in a plastically deformable second layer provided thereon.

It can be considered that the first interval is delimited between a first temperature (T1) and a second temperature (T2) higher than said first temperature (T1), Thus, in a further aspect of the present disclosure, in the step (i), the selection of the first composition and the second composition is performed such that: in the first interval, the shrinking behavior of the first composition is at a higher extent when compared to the shrinking behavior of the second composition. In such case, a first layer obtained from the first composition shrinks more than a second layer obtained from the second composition. The second layer can result in a plastically buckled topmost layer of the multi-layered product (1000).

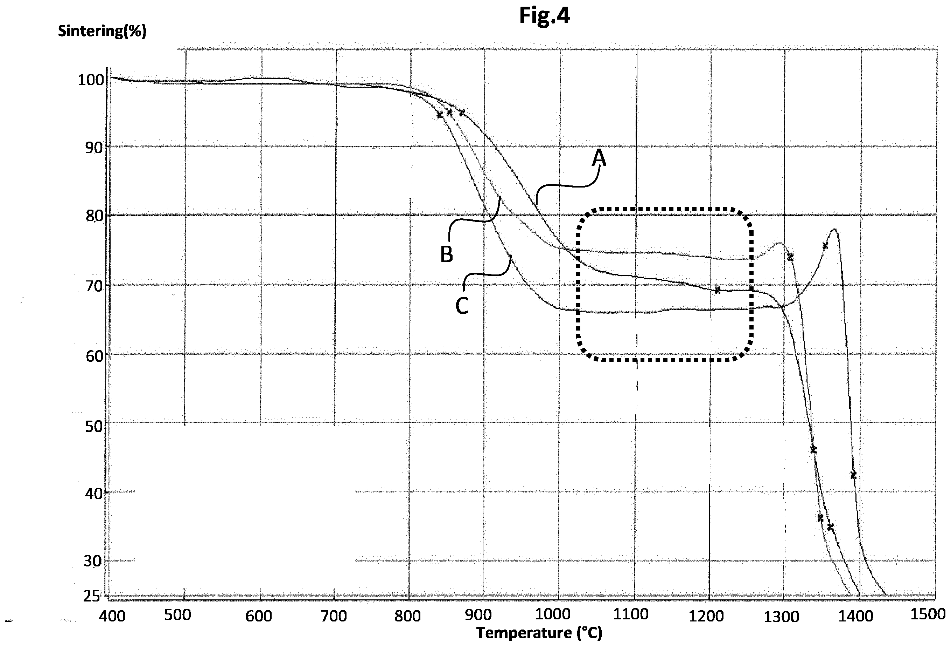

Fig.4 shows comparative thermal shrinking behaviors of three different compositions (geopolymer-based exemplary anti-slip compositions symbolized as A, B and C, which hereby correspond to sodium-based geopolymer, and its two different calcium ion exchanged derivatives for being evaluated/benchmarked as a second composition within the sense of the present invention. Axes of abscissas and ordinates respectively correspond to temperature (in °C), and to a commonly used relative magnitude indicator for thermal shrinkage (here: shown as Sintering %). It can be emphasized that with these second compositions, thermal shrinkage substantially ceases between a temperature range between circa (ca.) 1000°C and ca.1250°C (here, for sample A, between ca.1050°C and ca.1250°C). A comparative plastically buckling deformation is also available with zeolites instead of or along with geopolymers. Zeolites are considered analogous with geopolymers in various aspects. Therefore, zeolites which show a similar plastic deformation with that of geopolymers (as a response to temperature increments), can be used along with or instead of geopolymers in a second composition. Whether a zeolite sample is suitable for use in/as a second composition within the context of the present invention, can be determined by testing the temperature-related plastic deformability using the method according to the present disclosure. Therefore, it is simple to recognize suitable for use according to the present invention.

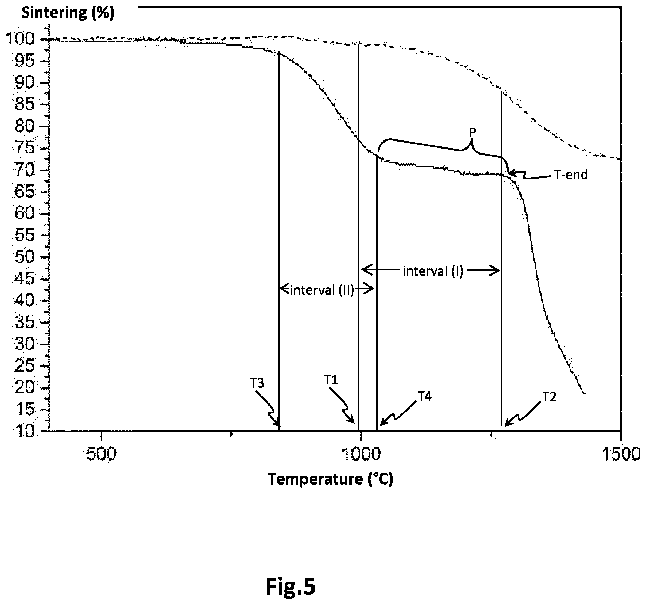

Fig.5 shows comparative thermal shrinking behaviors of an exemplary second composition (dashed track: a geopolymer-based second composition containing 50wt.% aluminium oxide particles as described in the Example 3, or Example 9) and another exemplary second composition (continuous track: a geopolymer-based composition containing 30 wt.% of aluminium oxide particles, as described in the Example 5, Example 8). Evidently, higher oxide/hydroxide/salt contents in such "composite" second compositions result in decreasing geopolymer (and/or zeolite) contents. With increasing weight percentages of oxides/hydroxides/salts with regard to the total weight of a second composition, sintering requires higher temperatures. Oxide/hydroxide/salt contents of lower than 40 wt.%, in particular up to 35 wt.%, preferably up to 30 wt.% with regard to the total weight of the second composition, and is easily sintered in an interval (II) corresponding to rather moderate temperatures such as 800°C - 1000°C. Sintering of the second layer decreases any pores/channels remaining within a matrix of the second layer; thus provides an enhanced "cleanability". Thus, with oxide/hydroxide/salt contents of up to 35 wt.% or more preferably up to 30 wt.%, highly enhanced anti-slip effect is available along with an easy-to-clean anti slip surface. Any synthetic or natural oxide/hydroxide/salt particles may be used. Some examples include but not limited to various crystalline forms of alumina and aluminium hydroxide, mullite, zircon, zirconia, hafnia, zinc oxide, cerium oxide, titania, aluminium titanate, tin oxide, amorphous and/or crystalline forms of SiOz, wollastonite, anorthite, diopside, cordierite, clay, kaolin, metakaolin, illite, mica, pyrophillite, spodumene, albite, orthoclase, nepheline, BaO, CaO, MgO, spinels and any other forms including carbonates and salts of the oxides listed above, which can form any of the above-listed particular oxides after firing; and their mixtures. Particularly, submicron-sized α-alumina (alpha alumina) particles are preferred to be used as (fine) oxide particles, since α-alumina particles also improve the wear resistance of the surface thanks to their high hardness.

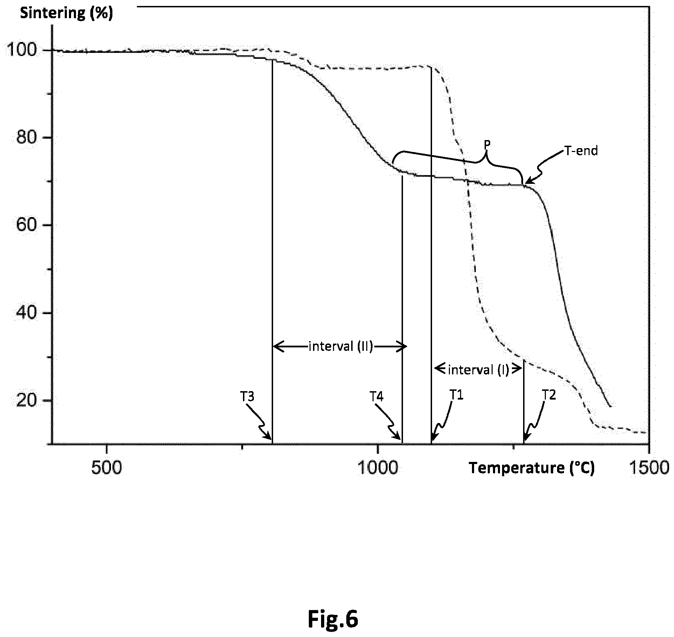

Fig.6 shows comparative thermal shrinking behaviors of a first composition (dashed track), and a second composition (continuous track, here: a geopolymer composition). Within the sense of the present disclosure, a first interval is symbolized as (I), and a second interval is symbolized as (II).

It can be considered that the "Sintering(%)", which is explained earlier, also resembles a temperature-related height change of a sample, which can be further considered in correlation with thermal shrinkage behavior of a composition forming said sample.

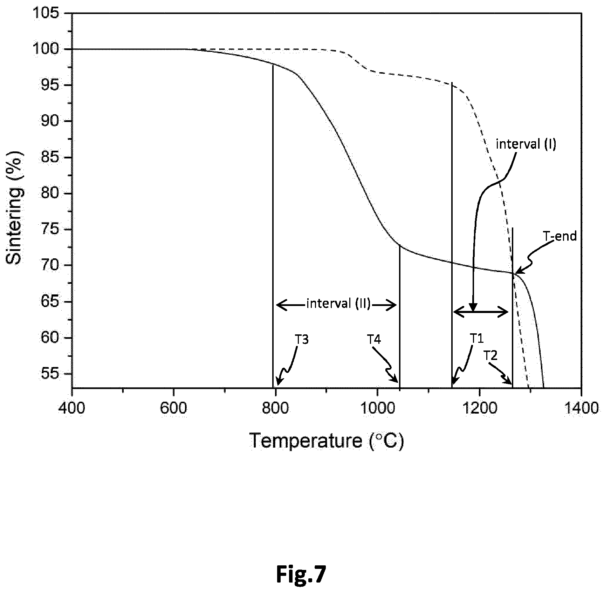

Fig.7 shows comparative thermal shrinking behaviors of a further first composition (dashed track), and a further second composition (continuous track, here: a geopolymer composition, which is a sodium-based geopolymer (abbreviated as NaGP)). Within the sense of the present disclosure, a first interval is symbolized as "interval (I)", and a second interval is symbolized as "interval (II)". In this example, it is noted that the first interval can have an upper limit corresponding to an end (T-end) of plastic deformation zone of the second composition. Plastic deformation zone (P) is identified as a part with relatively low inclination, between two adjacent and inclined parts of the respective graph.

In the step (ii), the first composition and the second composition can be placed such that the first composition remains between a substrate and the second composition. In such case, the first composition can be e.g. an (intermediate) glaze layer between a ceramic-based substrate and a second layer formed from the second composition.

The selection of the second composition can be performed such that
- the second composition sinters at a second interval which is different from the first interval; and
- considering that the first interval is delimited between a first temperature (T1) and a second temperature (T2) higher than said first temperature (T1); said second interval is within the range between a third temperature (T3) lower than the first temperature (T1), and a fourth temperature (T4) higher than the third temperature (T3).

Thus, both of the first composition and the second composition can be placed on a further first composition (such as a green tile) to form a multi-layered structure (100), are gradually heated so that:
- a temperature value at the multi-layered structure (100) passes through the second interval and reaches to the first interval, both of the first composition and second composition gets at least partly sintered; and as a result of this,
- sintering of the second composition provides a substantially impermeable second layer, and therefore provides a stain resistance to the multi-layered product (1000).

Here, the first temperature (T1) can be higher than the fourth temperature (T4). This results in that the sintering of the second layer is substantially completed when the temperature value reaches to a value within the first interval. As a result, a higher extent of buckling is achieved.

The multi-layered structure (100) in the step (ii) can be obtained by:
- placing the first composition on a substrate, and then
- placing the second composition onto the first composition.

As a result, the first layer (e.g. a glaze layer) and the second layer covering the first layer can be adjacent to each other; and the second layer gets buckled because of the higher extent of shrinkage of the first layer adhered thereto (when compared to the shrinkage of the second layer).

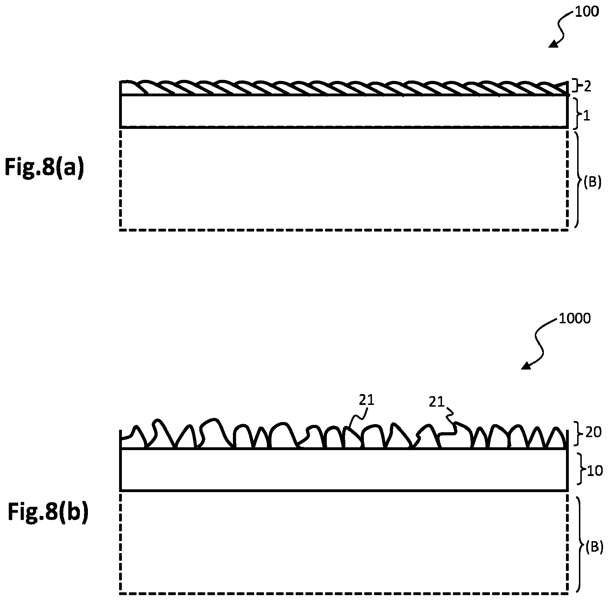

Fig.8(a) shows a schematic and partial section view of a multi-layered structure (100) which includes a "continuous" layer of the second composition (2) covering a first composition (1) prior to a heating or firing to a temperature within the first interval (interval (i)). The first composition (1) or the directly the second composition (2) can be optionally provided on a body of a substrate (B). In the latter case, the substrate (B) can be considered to be formed from the first composition (1). The second composition (2) can be provided as an inkjet ink; in which case the application amount of a "continuous" layer of second composition (2) can correspond to a value of 16 g/m² or higher, in particular if the second composition includes a geopolymer. In the case where the application amount is higher than 20 g/m² or in particular higher than 24 g/m², a PTV value of 58 or higher can be easily achievable.

The SEM images given in Fig. 1(b), Fig.2(a) and Fig.2(b) show the buckles (21) or mounds (24) on the anti-slip surface of the second layer (20) in a multi-layered product (1000) obtained with the method according to the present disclosure.

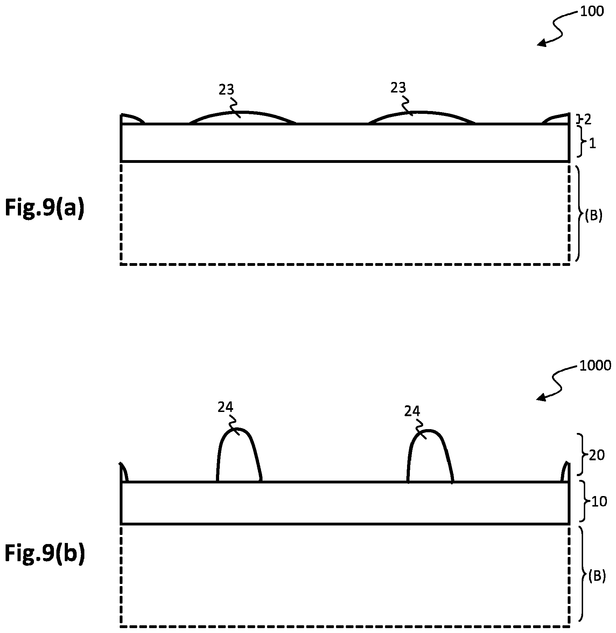

The buckles (21) and mounds/protuberances (24) are exemplified in the schematic side views of the multi-layered product (1000) shown in Fig.8(b) and Fig.9(b). Accordingly, there is further disclosed a multi-layered product (1000) obtained with any of the above-described variations of the method according to the present disclosure.

Fig.8(b) shows a schematic and partial section view of a multi-layered product (1000) obtained by heating the multi-layered structure (100) shown in the Fig.8(a), upon heating up to the first interval (interval (i)). The first layer (10) (formed from the first composition (1)) underwent a thermal shrinkage, resulting in formation of a roughened surface with buckles (21) due to a plastic deformation of the second layer (20) formed from the second composition (2). The buckles (21) are clearly visible in SEM images of the anti-slip surface of the second layer (20) of the multi-layered product (1000), with their micron-sized sharp/grainy wave shape. Said buckles (21) can have an amplitude or height of generally up to 30 micrometers; Ra and Rz values increase (e.g. double) with application of the second composition due to buckling when heated to the first interval. In the context of the present application, it is considered that such amplitude corresponds to Rz values of anti-slip surfaces of second layers. For instance, a geopolymer-based ink with an alpha-alumina content of 30 wt.% with respect to the total weight of the ink, provides surface roughness values (measured using a 3D surface profilometer) of Ra=4.3 micrometers and Rz=22.8 micrometers when applied on a satin glaze surface, whereas the satin glazed surface without any anti-slip composition application has Ra = 1.7 micrometers and Rz = 9.9 micrometers.

When the first layer (10) formed from the first composition (1) undergoes a thermal shrinkage due to sintering, a roughened surface with buckles (21) forms due to a plastic deformation of the second layer (20) formed from the second composition (2). Here, the second layer (20) can also partially or completely sinter throughout the heating. The buckles (21) are clearly visible (e.g. as in the Fig.1(b)) in SEM images of the anti-slip surface of the second layer (20) of the multi-layered product (1000), and can be in the form of micron-sized ocean waves. In the case where the second composition (2) includes one or more further oxides/hydroxides/salts in the form of powder (as in the Fig.5), the powder particles (241) are visible on the buckles (21) or mounds (24) as seen in the Fig.2(a). In Fig.2(a), the optically smoother zones which are roughly emphasized with dashed boundaries correspond to uncoated zones (242), which are plain surface portions of the first layer (10) which are not provided with the second composition (2), which occurs in formation of a second layer in a discontinuous fashion as depicted in the Fig.9, e.g. upon heating of a multi-layered structure (100) with an inkjet printed or sprayed second composition.

The multi-layered structure (100) in the step (ii) can be obtained by placing the second composition on the first composition serving as a substrate, i.e. the first composition can be a body of a substrate (B) which further can be in the form of a greenware. For instance, a non-glazed multi-layered product (1000) with a buckled surface (formed from the second composition) can be thus obtained.

Fig.9(a) shows a schematic and partial section view of a multi-layered structure (100) which includes a "discontinuous", "patterned" or "discrete" layer of the second composition provided on a first composition in the form of e.g. micron-sized dots/droplets (23), prior to heating/firing. The first composition or second composition can be optionally provided on a substrate (B) body. In the latter case, the substrate (B) can be considered to be formed from the first composition. The second composition (2) can be provided as an inkjet ink; in which case the application amount of a "discontinuous" layer of second composition (2) can correspond to a value smaller than 16 g/m², in particular if the second composition includes a geopolymer. With a geopolymer-based discontinuous second layer, a PTV value between 55 and 58 can be easily achievable.

Fig.9(b) shows a schematic and partial section view of a multi-layered product (1000) obtained by heating the multi-layered structure (100) shown in the Fig.9(a), upon heating up to the first interval. The first layer (10) (formed from the first composition (1)) underwent a thermal shrinkage, resulting in formation of a roughened surface with mounds/ or protuberances (22) due to a plastic deformation of the second layer (20) formed from the second composition (2). The mounds (24) become clearly visible in SEM images of a final product (Fig.2a), with their micron-sized protuberance shapes which have comparable or same anti-slip behavior and roughness values as in the above described buckles (21). In the exemplary case where the second layer (20) comprises a geopolymer-based (and/or zeolite-based) composition, and the first composition (1) is a ceramic-based composition or a glaze and/or an engobe layer provided on a ceramic-based composition, it is considered evident that such multi-layered product (1000) is obtained with the method of the present disclosure, because at sintering temperatures of such first compositions (1), geopolymer-based (and/or zeolit-based) second compositions inevitably undergo buckling.

Thus, the present invention proposes the use of compositions comprising one or more geopolymer and/or zeolite (in particular, geopolymers) in coating of ceramic-based substrates (e.g. greenware) to obtain an item with buckled or mounded surface. Thus, a new way of producing anti-slip items, or non-reflective items is enabled. Here, the anti-slip item corresponds to a ceramic-based product (e.g. a tile, shower tray, etc.) with an anti-slip behavior. The composition may further contain an oxide and/or hydroxide and/or salt within the context of the present application.

In the context of the present specification, said amplitude or height can correspond to a mean amplitude or mean height of the buckles (21) substantially orthogonal to the anti-slip surface, or a mean amplitude or mean height of the mounds (24) substantially orthogonal to an outer surface of the first layer (10).

As mentioned above, the substrate can be in the form of a greenware. In this case, a multi-layered (ceramic-based) structure with a buckled surface can be obtained by a single firing, in which the kilning of the greenware and the formation of buckles can be performed by gradually heating the greenware. Thus, the number of production process steps and production-related costs is minimized. The greenware may be a porcelain or ceramic entity such as tile, with or without an engobe layer.

The first composition can be a glaze composition provided
- directly on a ceramic greenware, or
- on another glaze layer which can be directly applied on a ceramic greenware, or
- on another glaze layer which is applied on an engobe layer on a ceramic greenware, or
- on an engobe layer directly applied on a ceramic greenware.

A further material can be provided on the product, for instance at a topmost layer, or beneath any transparent layer of the multi-layered product (1000). Said further material can provide an optical effect different from (and visible through) the second layer, and different from the first layer. In the case where the second layer is formed from a second material comprising a geopolymer, the amount of the geopolymer can be kept at a low value to render the second layer substantially transparent. As a result, an optical feature provided using said further material can be made visible through the second layer.

For instance, considering that a (e.g. typical) glaze composition shrinks at a first interval where it gets sintered; and said shrinkage is inherently at a higher extent than the shrinkage of a geopolymer-based second composition at the first interval. This is because a geopolymer-based second composition inherently has already shown thermal shrinkage at a second interval having lower temperature values than the first interval. As a result, the second composition gets buckled when the multi-layered structure (100) is brought to temperature values within or beyond (i.e. higher than) those constituting the first interval. Thus, a multi-layered product (1000) with an anti-slip surface is obtained. This applies even when a geopolymer (or a geopolymer-based) second composition is used in a sufficiently low amount to provide transparency through the second layer.

In accordance with the above statements, the present invention further proposes a multi-layered ceramic product having a first layer and a buckled or mounded second layer integrated on top of the first layer, wherein the second layer is obtained from a geopolymer and/or a zeolite. In said ceramic product, the first layer can be a glaze layer.

For being used in the obtainment of the multi-layered ceramic product, the present invention further proposes a composition comprising a geopolymer and/or a zeolite, for being employed as a second composition in the sense within the context of the above statements.

Preferably, said composition comprises a geopolymer, thus corresponds to a geopolymer-based second composition. As seen in particular in the Fig.4, a geopolymer-based (second) composition substantially maintains its dimensional integrity (see the dashed zone where the slopes of the graphs have relatively low values) until the temperature value reaches to around 1250-1280°C. Considering that the firing was completed at around 1200°C to achieve buckling, the dimensional integrity of a layer formed by said composition are maintained throughout the firing process, i.e. until reaching a second temperature (T2) which correspond to an upper limit (or warmer end) of the first interval.

The composition can be employed to form a second layer. Considering that, in the first interval, the first layer shows a shrinking behavior at a greater extent when compared to the shrinking behavior of the second layer; the shrinking (in particular, due to sintering) of the first layer results in the formation of buckles in the second layer.

The gist of the present invention includes the application of a geopolymer powder on the surface of a glazed tile or unglazed tile before firing, particularly on glazed tile. The thermal characteristic of the geopolymer powders is such that it makes the surface on which it is applied rough on micro scale and thus resistant to slipping (anti-slip). One of the advantages of the invention is that the degree of resistance to slipping can be tuned by simply adding micrometer or submicron sized powders of (water insoluble) oxides/hydroxides/salts into a geopolymer powder.

Another advantage is that the geopolymer powder (with or without any other oxide/hydroxide/salt powders) can be prepared as a digital ink (e.g. inkjet ink) to be applicable on glazed tiles before firing by the current inkjet printers. Further advantage is that the anti-slip surfaces prepared by using the digital ink are relatively smooth with Ra value of about 3-5 micrometers and thus relatively easy to clean according to EN ISO 10545-14 standard (e.g. as in the Example 3). The anti-slip layer can be arranged to transparent enough so that it can be applied over a decorating layer or an optical indicator layer without losing any graphics (e.g. a warning message, or a direction indicator).

According to the invention, a second composition (anti-slip composition) includes a zeolite-based and/or a geopolymer-based composition, which is in the form of a powder. Such powder can be applied directly with dry application, or in a paste, or in a suspension for spray application, or in an ink for inkjet printing, etc. Said composition can further include an oxide/hydroxide/salt, which can be also in the form of a powder. The composition can be applied either as a continuous or discontinuous (patchy) thin layer, as a second layer on a first layer (wherein said first layer can be e.g. a glaze layer, or an unfired porcelain tile, which can be glazed). Said application can be performed using current application techniques such as by digital printing, spraying or screen printing; such that a multi-layered structure (100) can be obtained.

Then the multi-layered structure (100) can be fired at a temperature within the first interval, which can correspond to a temperature high enough to sinter the porcelain tile to a required standard.

A first layer (e.g. glaze surface or a substrate) on which the second (anti-slip) composition is applied, reaches to a higher extent of optical mattness when compared to a comparable first layer on which the second composition is not applied. This phenomenon indicates the formation of a micro-scale roughness on the first layer.

The second composition can show four specific thermal characteristics at firing that are causing micro scale roughness on the glaze surface:
(i) sintering at a substantially lower temperature than the first composition on which it is applied (see Fig.5 to Fig.7),
(ii) substantial resistance against dissolving into a first composition on which it is applied during firing,
(iii) ability to resist complete spreading until above temperature T2, (as indicated in Fig.5 with a region "P"), and
(iv) plastic deformation ability, which enables buckling during firing.

An exemplary thermal behaviour of an exemplary first composition and of an exemplary second composition is given in the Fig.6:
- the anti-slip second composition starts shrinking at around 850°C, indicating an onset of sintering and the shrinkage stops at about 1000°C; indicating that a sintering and densification of the second composition is advanced or almost completed. Sintering of the second composition is not a necessity.
- further heating up to well over 1200°C does not cause any substantial dimensional change; which indicates that the second composition resists to complete spreading and melting, and remains intact up to such increased temperatures.
- the shrinking of a first layer (here: a typical matt glaze for a porcelain tile) shows that sintering-related shrinking starts over 1150°C. Sintering of the first composition (here: glaze composition, or glaze layer) can coincide with sintering temperatures of a substrate (here: a porcelain tile body) which can range between 1180°C and 1220°C.
- the difference in sintering and associated shrinking behaviour between the second composition and the first composition, and the property of the second composition to remain intact during firing, cause the formation of a micro scale roughness (buckles, or mounds/protuberances) at the second layer.

The reason to the formation of such micro scale roughness is that a footprint area of a zone on the first layer, at which the second composition/layer is applied, contracts due to thermal shrinking of the first composition (in Fig.6, the first composition is a glaze and starts shrinking at temperatures over 1150°C). If the second composition is applied in a continuous fashion as schematized in Fig.8(a) (in a high coating density), buckling occurs at the second layer formed from the second composition. If the second composition is applied in a discontinuous/discrete fashion as schematized in Fig.9(a) (in a lower coating density, e.g. in the form of micronscale dots), mounds/protuberances with extended heights form at the zones (e.g. dots) provided with the second composition. This can be considered an occurrence of buckling that makes the surface rough on micro scale by creating mounds.

The exemplary scanning electron micrograph presented in Fig.1(a) shows an example of a first layer not provided with a second composition (here: a normal glaze surface of a porcelain tile) and the exemplary scanning electron micrograph presented in Fig.1(b) shows a multi-layered structure including a first layer provided with a second layer (here: an anti-slip second composition on a glaze layer of a porcelain tile). Buckling induced roughness is clearly visible in Fig.1(b). A definition of plastic deformation is as follows: "a permanent distortion that occurs when a material is subjected to tensile, compressive, bending, or torsion stresses that exceed its yield strength and cause it to elongate, compress, buckle, bend, or twist". Here, the presence of intact buckles-related roughness, is the evidence of that the second composition is able to show plastic deformation at the shrinkage of the first layer.

The anti-slip property depends on whether the second composition forming the anti-slip second layer includes or consists of a pure geopolymer powder (and/or zeolite powder) which can be mixed with water insoluble further oxide(s), hydroxide(s) or salt(s) in the form of powder. In other words, a second layer (20) can be formed from a second composition (2) which further comprises one or more water insoluble component in the form of powder, said component being selected from the list consisting of oxides, hydroxides, salts, and mixtures thereof.

If said further oxides and/or hydroxides and/or salts are substantially chemically inert against the geopolymer powder (throughout the heating up to the first interval of temperature), the anti-slip property increases, when compared to the case where the second composition consists of a pure geopolymer powder (or a pure zeolite powder). Or, if said oxides and/or hydroxides and/or salts chemically react with the geopolymer powder, the anti-slip property may decrease. At the end of a firing, any unreacted fine oxide/hydroxide/salt particles create micro/nano size mounds on the surfaces of large mounds that are formed due to the buckling of the second layer related to the shrinkage of the first layer (see: Fig.2(a)).

On the other hand, oxide/hydroxide/salt particles which are prone to react with the geopolymer (or zeolite), may reduce the deformation resistance of the geopolymer (and/or zeolite) (i.e. an ability to resist complete spreading until above temperature T2) thus reducing the anti-slip property.

Furthermore, if the (anti-slip) second composition has a substantially higher extent of drying shrinkage when compared to the thermal shrinkage of the first composition, this induces a network of micro-cracks in the second layer formed from the second composition at the end of firing. These micro-cracks cannot be healed at firing, and remain on the surface at the end of the firing (see: Fig.2(b)); thereby further increasing the anti-slip property by forming obstacles against slipping.

In the case where the first composition is a glaze composition, the glaze is preferred to be a satin glaze or a matt glaze, which have an inherent extent of roughness. The second composition placed thereon will increase the roughness at firing; and an even enhanced anti-slip effect is thus availed.

Considering that it is easier to clean a surface with a low roughness, a surface with a low degree of mattness is rather easy to clean using mechanical cleaning methods (e.g. wiping or mopping). Comparative levels of cleanability of a second layer formed on a first layer will be as follows:

| First laver: | Cleanability: |
|---|---|
| matt glaze | low |
| satin glaze | higher |
| glossy glaze | even higher |

Accordingly, a second layer formed on a matte glaze is more difficult to clean when compared to a second layer formed on a satin glaze, and even more difficult to clean when compared to a second layer formed on a glossy glaze.

Application of the second composition on a first composition which forms a smooth first layer (e.g. a glossy glaze) requires a larger amount (e.g. thickness) of the first composition to be applied in order to get a favourable extent of anti-slip effect. A first composition (e.g. glaze) on which the second composition is applied to form an anti-slip layer, can start shrinking (e.g. sintering) after the completion of a shrinking (e.g. sintering) of the second composition.

In the case where an optical contrast-bearing feature (such as a decoration layer or an optical indicator layer) is employed between the first layer and the second layer, the second composition can be applied onto such contrast-bearing feature. As an alternative, such optical contrast-bearing feature can be placed onto the second composition, such that a decoration layer or an optical indicator layer can be formed on the anti-slip second layer. It is preferred that the optical contrast-bearing feature is employed between the first composition and the second composition (e.g. the anti-slip layer is formed on a decoration layer or optical indicator layer) to protect the optical contrast-bearing feature from abrasion when the multi-layered product (1000) is in use.

Apart from providing a slip resistance, another aspect of the present invention is modifying a resulting optical appearance of a rather smooth first layer obtained from a first composition (e.g. a first layer formed from a first composition, firing of which normally results in a glossy glaze surface) with the application of the second composition. By increasing the extent/ or amount of the second composition applied onto a first composition (which can be a glossy glaze for a wall tile or floor tile), the mattness of a resulting optical appearance can be obtained which corresponds to a mattness range varying from that of a satin surface finish to that of a matt surface finish. Likewise, by introducing an oxide such as zircon or wollastonite that partially or fully reacts with the second composition, the mattness can be tuned towards obtaining more of a satin finish. As mentioned above, geopolymers are suitable for use in making a second composition which provides an anti-slip second layer within the context of the present application. Briefly, geopolymers can be described as inorganic polymers that are obtained by the dissolution of amorphous aluminosilicates in a highly alkaline starting solution to form SiO₄ and AlO₄⁻ units; and their polymerisation to form SiO₄ and AlO₄ tetrahedral units bridged by oxygen, followed by a subsequent polycondensation and formation of a rigid material (i.e. a rigid network). This process is called geopolymerisation and said rigid material is called geopolymer.

The rigid geopolymer includes (and can consist of) precipitates substantially having a size within a range usually between 15 nanometers and 40 nanometers, along with nanometer-sized pores between said precipitates. The precipitates are structurally amorphous. -1 charge of AlO₄ tetrahedral units are neutralised by alkali ions present in the starting solution.

Therefore, a geopolymer can be composed of alkali aluminosilicates. Such composition and its very fine precipitate size makes a geopolymer sinterable at temperatures just over 800°C (see: Figure 4 where a dramatic area variation is observed for each of the geopolymer-based second composition samples A, B and C). Possible sources of amorphous aluminosilicates can be metakaolin, fly ashes etc. and the alkali (starting) solution can include sodium or potassium silicates and their mixtures and/or sodium or potassium hydroxides and their mixtures. Amorphous silica could be used together with NaOH and/or KOH in place of said alkali solution.

There are a number of geopolymer compositions defined over SiO₂/Al₂O₃ ratios, ranging from 1:0 to over 5:1, each having different application areas. Table 1 lists a preferred composition range of geopolymers within the context of the present application. Alkali ions used for achieving a charge balance in such geopolymer composition can include Na, K and Cs ions or a mixture thereof. The alkali ions can be replaced partially or entirely by many other ions e.g. ions of Li, Mg, Ca, Ba, Sr, Ti, Zr, Hf, V, Cr, Mn, Fe, Co, Ni, Cu, Zn, Ag, by an ion exchange process. Therefore, geopolymers with different compositions can be obtained simply by ion exchange, which does not inherently result in changes in the ratio between SiOz and Al₂O₃ in the composition. When Ag is used, the second composition will provide a second layer with an antibacterial anti-slip surface.

It is to be noted that aluminium in the alkali activated geopolymer structure can partially or fully be substituted by boron by using suitable starting materials. Likewise, geopolymer with phosphate ions can be synthesised without using alkali ions.

A second composition which is ready for being applied, can be prepared in the form of a slurry by grinding a geopolymer (and/or a zeolite) into a fine powder, which can be mixed with powders of one or more oxides and/or hydroxides and/or salts as mentioned above, in an aqueous vehicle, or non-aqueous vehicle, or a combination of an aqueous vehicle and a non-aqueous vehicle, to form a fluid mixture. The application of the second composition can correspond to e.g. being placed onto a first composition (e.g. onto a glaze) or directly on a substrate which can be considered as a first composition. Here, the substrate can be (a surface of) an unglazed greenware, for instance (a surface of) a greenware to form a tile.

The application of the second composition can be performed according to a known application technique such as spraying, or using discs, or by screen printing or depositing as powder directly etc. However, one of the advantageous features of this invention is that the second composition (anti-slip composition) could also be prepared in the form of an ink. Said ink can be prepared using an aqueous vehicle, or a non-aqueous vehicle, or the combination of aqueous and non-aqueous vehicles. The vehicle can be selected to render the ink suitable for being deposited onto a substrate. Said substrate can be e.g. a glazed or unglazed tile surface. The application of the ink can be performed using an inkjet printer. The surfaces of a second layer obtained by inkjet printing can be considered rather smooth, but still provides an exceptional slip resistance performance, in particular when compared to commercially available ceramic-based anti-slip products.

Although geopolymer powders are preferred as a material for being employed in a second composition in the sense of the present application, synthetic and/or natural zeolites with similar thermal behaviour to the geopolymer powder in the terms of thermal shrinking and plastic deformation, can also be used for preparing anti-slip second layers, in the same manner as with the geopolymer powders.

### EXAMPLES:

The following exemplary experimental tests are performed for better understanding the above-described concept of the present invention. A hot stage microscope (MISURA 3.32 ODHT-HSM 1600/80) was used in measuring shrinkage which is taken as a measure of shrinking behavior as a response to temperature values reached at gradual heating.

The firing temperatures were selected in order to reach to a temperature within the first interval, taking the thermal shrinking behaviors of respective first composition(s) and second composition(s) employed in the firingrelated examples.

Application of the second composition in the form of an inkjet ink using an inkjet printer enables the obtainment of a discontinuous, patterned second layer (of anti-slip mounds or protuberances formed from the second composition). This provides an anti-slip surface with a minimized consumption of the second composition.

On the other hand, the application of the second composition by e.g. spray coating enables the obtainment of a continuous or discontinuous second layer (with a buckled, rough anti-slip surface obtained from the second composition). This provides an enhanced anti-slip property to the anti-slip surface.

### Example 0:

For illustrative purposes of this invention, a metakaolin based geopolymer powder, which is preferred for achieving transparency when a second layer is formed therefrom, is used in the following examples.

The main raw materials used in synthesis of an exemplary second composition (a metakaolin-based geopolymer material) include the following components: metakaolin, sodium silicate solution, sodium hydroxide, and (a complementary amount of) water. Sodium metasilicate powder and/or a combination of nano-sized amorphous silica powder with NaOH could also be used instead of (or along with) the sodium silicate solution.

The degree or extent of geopolymerisation is affected by the starting composition. A fully geopolymerisable composition is preferred, but any composition that show at least a partial geopolymerisation could also be used.

Nevertheless, an exemplary yet preferred range is given in Table 1.

**Table 1. Composition ranges for a metakolin based geopolymer in mole ratios**

| Oxides | Ranoes of mole ratios ofoxides | |
|---|---|---|
| | Preferred range | More preferred range |
| (Na₂O and/or K₂O) : SiO₂ | 0.20: 1 - 0.33: 1 | 0.20: 1 - 0.28: 1 |
| SiO₂ : Al₂O₃ | 5:1 or lower | 2:1- 4.5:1 |
| H₂O : (NazO and/or K₂O) | 8:1 - 25:1 | 10:1-15:1 |
| (Na₂O and/or K₂O) : Al₂O₃ | 0.25:1 - 1.25:1 | 0.6:1 - 1:1 |

The raw materials used in preparation of the second composition include metakaolin (commercially obtainable e.g. under brand name Metastar 501, from Imerys, France), sodium silicate having 37% w/w solid content, SiO₂:Na₂O mole ratio being about 2, NaOH pellets and water (e.g. tap water, but water purified to any extent could also be used). It is to be noted that sodium silicate could be partially or fully replaced with potassium silicate, and NaOH could be partially or fully replaced with KOH. The raw materials were (e.g. vigorously) mixed for about 15 minutes and the mixture obtained by said mixing was cast into moulds. The moulds were set to an extended temperature for setting (e.g. at 80°C, in a closed container for 2 hours).

The set (rigidified) geopolymer material was then ground down for achieving a fine particle sized geopolymer powder, e.g. by crushing into a coarse powder by a crusher to make it ready to be loaded into a ball mill, and then by ball milling to decrease the mean particle size of the geopolymer powder.

Additionally, the crushed or ground geopolymer powder can be ion exchanged to modify chemical composition of the geopolymer without substantially changing its thermal behaviour. Said ion exchange can be performed partially or fully as described by Barbosa and MacKenzie (Materials Research Bulletin 38 (2003) 319-331), using ions selected from the list consisting of Li, Mg, Ca, Ba, Sr, Ti, Zr, Hf, V, Cr, Mn, Fe, Co, Ni, Cu, Zn, Ag.

When the exchanged (or substitute) ion is Ag ion, the second layer obtainable from the second composition (i.e. geopolymer composition) may additionally have an antibacterial function as described by Barbosa and MacKenzie.

### Example 1

Geopolymer powder obtained as described in the Example 0, was wet milled (here: wet ball milling is used as an example to wet milling) to obtain a second composition as an anti-slip composition. In the exemplary wet ball milling, an ester based solvent is used as liquid carrier. The milling was proceeded down to average particle size of about 4 micrometers. Then, the output of the wet ball milling was transferred to a nanomill (Labstar from Netsczh, Germany) for further milling down to a D₉₉ particle size of 1 micrometer or lower, and then sieved e.g. through a 3 micrometer sieve to obtain a second composition in the form of a pure geopolymer ink (e.g. with 40 wt% of solid content).

Such ink was applied by an inkjet printer on a matt glaze surface (which corresponds to a first layer formed from a first composition) on a porcelain tile to form a multi-layered structure (100), and fired. The application was performed with two different application densities: 16 g/m² and 24 g/m². The firing was performed at a top temperature of 1200°C, and with a total firing time of 60 min cold to cold, in an industrial furnace, together with a comparative item. The comparative item was a portion of the same tile which is not provided with the second composition.

After firing, the outer surface of the second layer of the multi-layered structure (100) (i.e. the anti-slip surface), obtained using the second composition, had a higher extent of optical mattness when compared to the glazed surface of the comparative item.

The anti-slip property of the anti-slip surface was measured in accordance with the wet pendulum method (according to BS 7976-2:2002, using a 96 shore rubber). The glaze surface of the comparative item had an extent of anti-slip property corresponding to 30 PTV (pendulum value) while the anti-slip surface with the application amount of 16 g/m² and 24 g/m² had 42 PTV and 38 PTV, respectively. The higher pendulum value of the anti-slip surface with 16 g/m² of application amount was due to partial coverage of the surface which improves the surface roughness. In the sense of the present description, the term "application amount" can be also read as "coating amount".

### Example 2

For exchanging sodium ions with calcium ions, geopolymer powder obtained as described in the Example 0, was dispersed in an aqueous solution of CaCl₂. The CaCl₂ concentration in the aqueous solution prior to dispersing the geopolymer powder was 0.28 M (mol/liter). The geopolymer powder concentration in the dispersion was 1:9 (i.e. 10 wt.% with regard to the total weight of the dispersion). The dispersion was kept for completion of ion exchange, e.g. for 24 hours. Then the dispersion is filtered for separation of the geopolymer powder, and the filtered powder was washed for removing chlorine ions (e.g. washed with water for several, for instance 3 times), and then dried. As a result of the ion exchange, 45 molar percent of the sodium ions were exchanged with calcium ions.

Then, the dried powder was wet milled (e.g. wet ball milling) to obtain a second composition as an anti-slip composition. In said exemplary wet milling, water is used as liquid carrier (e.g. 30 wt.% of solid content), down to average particle size of about 4 micrometers (i.e. 4 micrometers). Then, the milled powder was applied as a second composition to form a second layer, onto a satin glaze (which corresponds to a first layer formed from a first composition), to form a multi-layered structure (100). The application was performed using spray coating with an application amount of 24 g/m². Then the multi-layered structure (100) was fired as in the Example 1, together with a comparative item. The comparative item was a portion of the same tile which is not provided with the second composition.

After firing, the outer surface of the second layer of the multi-layered structure (100) (i.e. the anti-slip surface), obtained using the second composition, had a higher extent of optical mattness when compared to the glazed surface of the comparative item. The anti-slip property of the anti-slip surface was measured in accordance with the wet pendulum method, as in the Example 1. The anti-slip surface of the multi-layered item had an extent of anti-slip property corresponding to a pendulum value of 43 PTV.

### Example 2-1:

A second composition obtained as in the Example 2, was applied onto a satin glaze (which corresponds to a first layer formed from a first composition), to form a multi-layered structure (100). The application was performed using spray coating, at a coating density of 15 g/m2. Then the multi-layered structure (100) was fired as in the Example 1, together with a comparative item. The comparative item was a portion of the same tile which is not provided with the second composition.

After firing, the outer surface of the second layer of the multi-layered structure (100) (i.e. the anti-slip surface), obtained using the second composition, had a higher extent of optical mattness when compared to the glazed surface of the comparative item. The anti-slip property of the anti-slip surface was measured in accordance with the wet pendulum method, as in the Example 1. The anti-slip surface of the multi-layered item had an extent of anti-slip property corresponding to a pendulum value of 45 PTV.

### Example 3:

Geopolymer powder obtained as described in the Example 0, was wet milled (here: wet ball milling is used as an example to wet milling) to obtain a second composition as an anti-slip composition. In the exemplary wet ball milling, an ester based solvent is used as liquid carrier. The milling was proceeded until an average particle size of about 4 micrometers is achieved. Then, the output of the wet ball milling was mixed with alpha-alumina powder (as an example to oxides which could be partially or fully replaced with hydroxides and/or salts) (commercially availed from Alteo, France under the brand name "Digital 40"). Said mixing was performed using an additional liquid carrier (e.g. an organic or inorganic solvent, here: an ester based solvent) at a geopolymer powder / alpha alumina weight ratio of 50:50. Then, this mixture was transferred to a nanomill (Labstar from Netsczh, Germany) for further milling down to a D₉₉ particle size of 1 micrometer or lower, and then sieved e.g. through a 3 micrometer sieve to obtain a second composition in the form of a geopolymer-based ink (e.g. with 40 wt.% of solid content).

Such ink was applied by an inkjet printer on a matt glaze surface (which corresponds to a surface of a first layer formed from a first composition) on a porcelain tile to form a multi-layered structure (100), and fired. The application was performed with an application amount of 24 g/m². The firing was performed at a top temperature of 1200°C, and with a total firing time of 60 min cold to cold, in an industrial furnace, together with a comparative item. The comparative item was a portion of the same tile which is not provided with the second composition.

The matt glazed surface of the comparative item had roughness values of Ra=3.3 micrometers and Rz=17.0 micrometers, whereas the anti-slip surface obtained from the ink as the second layer had roughness values of Ra=5.6 micrometers and Rz=30.3 micrometers. The anti-slip property of the anti-slip surface was measured in accordance with the wet pendulum method, as in the Example 1. The anti-slip surface of the multi-layered item had an extent of anti-slip property corresponding to a pendulum value of 59 PTV. The anti-slip property of the anti-slip surface was also measured in accordance with DIN 51130 (by the rump method) and R12 class was obtained.

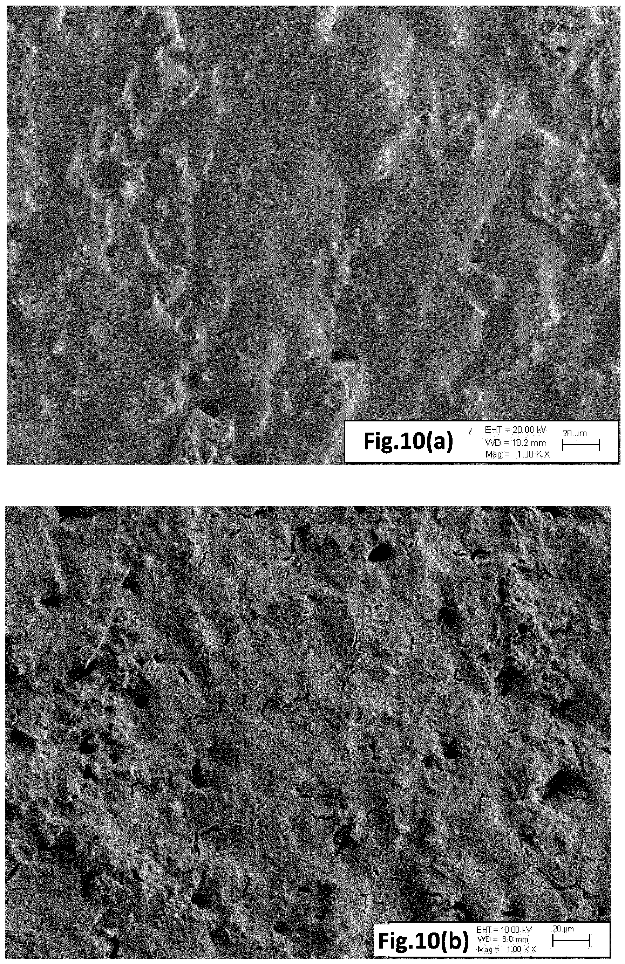

Fig.10(a) to Fig.10(c) are SEM images of an outer surface formed from the second composition in relation to the Example 3, as an exemplary evidence to the buckling due to the plastic deformation of a second layer in the first temperature interval:
- In Fig.10(a), the second composition is sintered at 850°C (here: in the second interval, and before reaching to the first interval), just before the onset of shrinkage.
- In Fig.10(b), the second composition is sintered at 1050°C (here: at an advanced temperature within the second interval, but not yet reached to an advanced temperature in the first interval), just after completion of shrinkage.

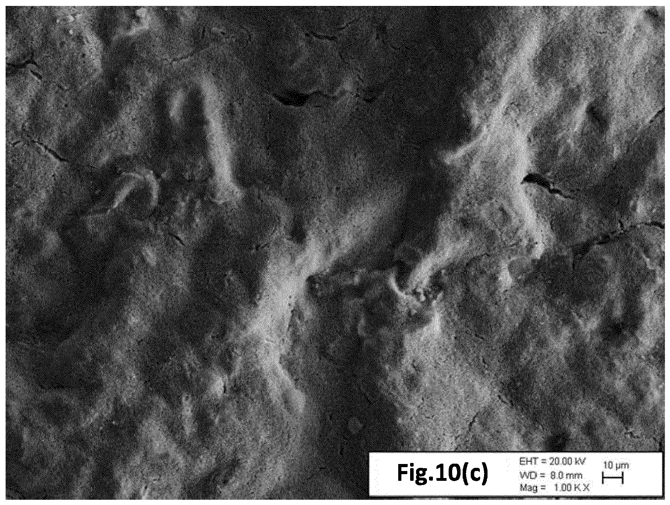

- In Fig.10(c) the second composition is sintered at 1200°C (here: at an advanced temperature within the first interval).

### Example 4;

Geopolymer powder obtained as described in the Example 0, was wet milled (here: wet ball milling is used as an example to wet milling) to obtain a second composition as an anti-slip composition. In said wet milling, an ester based solvent was used as an exemplary liquid carrier, which could be selected from organic and inorganic liquids/solvents. The wet milling was proceeded until an average particle size of about 4 micrometers is achieved. The output of the wet milling was mixed with alpha-alumina powder (as an example to oxides which could be partially or fully replaced with hydroxides and/or salts) (commercially availed from Alteo, France under the brand name "Digital 40"). Said mixing was performed using an additional liquid carrier (here, an ester based solvent as an example to liquid carrier which can be selected from organic or inorganic solvents) at a geopolymer powder / alpha alumina weight ratio of 60:40. Then, this mixture was transferred to a nanomill (Labstar from Netsczh, Germany) for further milling down to a D₉₉ particle size of 1 micrometer or lower, and then sieved e.g. through a 3 micrometer sieve to obtain a second composition in the form of a geopolymer-based ink (e.g. with 40 wt.% of solid content).

Such ink was applied by an inkjet printer on a satin glaze surface (which corresponds to a surface of a first layer formed from a first composition) on a porcelain tile to form a multi-layered structure (100), and fired. The application was performed with an application amount of 16 g/m². The firing was performed at a top temperature of 1200°C, and with a total firing time of 60 min cold to cold, in an industrial furnace, together with a comparative item. The comparative item was a portion of the same tile which is not provided with the second composition.

The anti-slip property of the anti-slip surface was measured in accordance with the wet pendulum method, as in the Example 1. The anti-slip surface of the multi-layered item had an extent of anti-slip property corresponding to a pendulum value of 59 PTV.

### Example 5:

Geopolymer powder obtained as described in the Example 0, was wet milled (here: wet ball milling is used as an example to wet milling) to obtain a second composition as an anti-slip composition. In said exemplary wet milling, an ester based solvent was used as an exemplary liquid carrier, which could be selected from organic and inorganic liquids/solvents. The wet milling was proceeded until an average particle size of about 4 micrometers is achieved. The output of the wet ball milling was mixed with alpha-alumina powder (as an example to oxides which could be partially or fully replaced with hydroxides and/or salts) (commercially availed from Alteo, France under the brand name "Digital 40"). Said mixing was performed using an additional liquid carrier (here, an ester based solvent was used as an example to liquid carriers which can be selected from organic or inorganic solvents) at a geopolymer powder / alpha alumina weight ratio of 70:30.

Then, this mixture was transferred to a nanomill (Labstar from Netsczh, Germany) for further milling down to a D₉₉ particle size of 1 micrometer or lower, and then sieved e.g. through a 3 micrometer sieve to obtain a second composition in the form of a geopolymer-based ink (e.g. with 40 wt.% of solid content).

Such ink was applied by an inkjet printer on a satin glaze surface (which corresponds to a surface of a first layer formed from a first composition) on a porcelain tile to form a multi-layered structure (100), and fired. The application was performed with an application amount of 16 g/m². The firing was performed at a top temperature of 1200°C, and with a total firing time of 60 min cold to cold, in an industrial furnace, together with a comparative item. The comparative item was a portion of the same tile which is not provided with the second composition.

The satin glazed surface of the comparative item had roughness values of Ra=1.7 micrometers and Rz=9.9 micrometers, whereas the anti-slip surface obtained from the ink as the second layer had roughness values of Ra=4.3 micrometers and Rz=22.8 micrometers. The anti-slip property of the anti-slip surface was measured in accordance with the wet pendulum method, as in the Example 1. The anti-slip surface of the multi-layered item had an extent of anti-slip property corresponding to a pendulum value of 58 PTV.

### Example 6;

Geopolymer powder obtained as described in the Example 0, was wet milled (here: wet ball milling is used as an example to wet milling) to obtain a second composition as an anti-slip composition. In said wet ball milling, in an ester based solvent was used as an exemplary liquid carrier, which could be selected from organic and inorganic liquids/solvents. The wet milling was proceeded until an average particle size of about 4 micrometers is achieved. The output of the wet ball milling was mixed with alpha-alumina powder (as an example to oxides which could be partially or fully replaced with hydroxides and/or salts) (commercially availed from Alteo, France under the brand name "Digital 40"). Said mixing was performed using an additional liquid carrier (here, an ester based solvent as an example to liquid carrier which can be selected from organic or inorganic solvents) at a geopolymer powder / alpha alumina weight ratio of 74:26. Then, this mixture was transferred to a nanomill (Labstar from Netsczh, Germany) for further milling down to a D₉₉ particle size of 1 micrometer or lower, and then sieved e.g. through a 3 micrometer sieve to obtain a second composition in the form of a geopolymer-based ink (e.g. with 36 wt.% of solid content).

Such ink was applied by an inkjet printer on a matt glaze surface (which corresponds to a surface of a first layer formed from a first composition) on three separate porcelain tiles to form three respective multi-layered structure (100)s, and fired. The application was performed with respective three different application densities of 8 g/m², 12 g/m² and 16 g/m². The firing was performed at a top temperature of 1200°C, and with a total firing time of 60 min cold to cold, in an industrial furnace, together with a comparative item. The comparative item was a portion of the same tile which is not provided with the second composition.

The anti-slip properties of the anti-slip surfaces were measured in accordance with the wet pendulum method, as in the Example 1. The anti-slip surfaces of the multi-layered items had respective extents of anti-slip property corresponding to pendulum values of 55 PTV, 55 PTY and 58 PTV. When the rubber used in the wet pendulum method was changed to be a 55 shore rubber, the anti-slip surfaces of the multi-layered items had respective extents of anti-slip property corresponding to pendulum values of 57 PTV, 61 PTV and 68 PTV. The matt glaze surface without application of the second composition was measured as 40 PTV.

Glossiness values of the comparative item, and of the multi-layered items obtained from the multi-layered structures (100) with application densities of 8 g/m², 12 g/m² and 16 g/m² were measured by a glossmeter in accordance with EN ISO 2813 at two different angles (20° gloss test: 20° from normal, and 60° gloss test: 60° from normal); results of which being provided in the following Table 2:

**Table 2: Gloss values measured for the experimental samples described in the Example 6**

| Application amount (g/m²) | 20° gloss | 60° gloss |
|---|---|---|
| 0 (comparative item) | 0.8 | 6.1 |
| 8 | 0.4 | 2.6 |
| 12 | 0.4 | 1.9 |
| 16 | 0.3 | 1.2 |

It is known that mattness does not always provide optical non-reflective property to a surface of a coating layer. For instance, some matt surfaces can reflect light when approached from an angle higher than 50° from normal. The anti-slip surface of the second layer available according to the present invention provides non-reflective optical character in any embodiment as exemplified in the experimental Examples 1 to 17, even when the aspect angle is higher than 50° from normal, i.e. even when the aspect angle is lower than 40° from the anti-slip surface.

### Example 7:

Geopolymer powder obtained as described in the Example 0, was wet milled (here: wet ball milling is used as an example to wet milling) to obtain a second composition as an anti-slip composition. In said wet milling, an ester based solvent was used as an exemplary liquid carrier, which could be selected from organic and inorganic liquids/solvents. The wet milling was proceeded until an average particle size of about 4 micrometers is achieved. The output of the wet ball milling was mixed with alpha-alumina powder (as an example to oxides which could be partially or fully replaced with hydroxides and/or salts) (commercially availed from Alteo, France under the brand name "Digital 40"). Said mixing was performed using an additional liquid carrier (e.g. an organic or inorganic solvent) at a geopolymer powder / alpha alumina weight ratio of 74:26.

Then, this mixture was transferred to a nanomill (Labstar from Netsczh, Germany) for further milling down to a D₉₉ particle size of 1 micrometer or lower, and then sieved e.g. through a 3 micrometers sieve to obtain a second composition in the form of a geopolymer-based ink (e.g. with 36 wt.% of solid content).

Such ink was applied by an inkjet printer on a matt glaze surface (which corresponds to a surface of a first layer formed from a first composition) on a porcelain tile to form a multi-layered structure (100), and fired. The application was performed with an application amount of 12 g/m², such that a periodic pattern of the second composition is formed on the first layer. The firing was performed at a top temperature of 1200°C, and with a total firing time of 60 min cold to cold, in an industrial furnace, together with a comparative item. The comparative item was a matt glazed tile which is not provided with the second composition.

The anti-slip property of the anti-slip surface was measured in accordance with the wet pendulum method, as in the Example 1 but using 55 shore rubber. The anti-slip surface of the multi-layered item had an extent of anti-slip property corresponding to a pendulum value of 47 PTV.

### Example 8:

Geopolymer powder obtained as described in the Example 0, was wet milled (here: wet ball milling is used as an example to wet milling) together with alpha-alumina powder (as an example to oxides which could be partially or fully replaced with hydroxides and/or salts) (commercially availed from Alteo, France under the brand name "Digital 40") to obtain a second composition as an anti-slip composition in the form of a suspension (e.g. with 30 wt.% of solid content) at a geopolymer powder / alpha alumina weight ratio of 70:30. After milling, the average particle size of the suspension was about 3 micrometers in said wet milling, water was used as an exemplary liquid carrier, which could be selected from organic and inorganic liquids/solvents.

Said second composition was applied by spray coating on a matt glaze surface (which corresponds to a surface of a first layer formed from a first composition) on a porcelain tile to form a multi-layered structure (100), and fired. The application was performed with an application amount of 10 g/m². The firing was performed at a top temperature of 1200°C, and with a total firing time of 60 min cold to cold, in an industrial furnace, together with a comparative item. The comparative item was a portion of the same tile which is not provided with the second composition.

The matt glazed surface of the comparative item had roughness values of Ra=3.3 micrometers and Rz=17.0 micrometers, whereas the anti-slip surface obtained from the ink as the second layer had roughness values of Ra=5.4 micrometers and Rz= 31.0 micrometers. The (anti-slip) surface of the second layer obtained from the second composition had a matt optical appearance. The anti-slip property of the anti-slip surface was measured in accordance with the wet pendulum method, as in the Example 1. The anti-slip surface of the multi-layered item had an extent of anti-slip property corresponding to a pendulum value of 55 PTV. The anti-slip property of the anti-slip surface was also measured in accordance with DIN 51130 (by the rump method) and R11 class (23 degrees slipping angle) was obtained. The anti-slip property of the anti-slip surface was further measured in accordance with DIN 51097 (by the bare foot rump method) and Class B (21 degrees slipping angle) was obtained.

### Example 9:

Geopolymer powder obtained as described in the Example 0, was wet milled (here: wet ball milling is used as an example to wet milling) together with alpha-alumina powder (as an example to oxides which could be partially or fully replaced with hydroxides and/or salts) (commercially availed from Alteo, France under the brand name "Digital 40") to obtain a second composition as an anti-slip composition in the form of a suspension (e.g. with 30 wt.% of solid content) at a geopolymer powder / alpha alumina weight ratio of 50:50. After milling, the average particle size of the suspension was about 3 micrometers. In said wet milling, water was used as an exemplary liquid carrier, which could be selected from organic and inorganic liquids/solvents.

Said second composition was applied by spray coating on a satin glaze surface (which corresponds to a surface of a first layer formed from a first composition) on a porcelain tile to form a multi-layered structure (100), and fired. The application was performed with an application amount of 10 g/m². The firing was performed at a top temperature of 1200°C, and with a total firing time of 60 min cold to cold, in an industrial furnace, together with a comparative item. The comparative item was a portion of the same tile which is not provided with the second composition.

The (anti-slip) surface of the second layer obtained from the second composition had a matt optical appearance. The anti-slip property of the anti-slip surface was measured in accordance with the wet pendulum method, as in the Example 1. The anti-slip surface of the multi-layered item had an extent of anti-slip property corresponding to a pendulum value of 61 PTV. The anti-slip property of the anti-slip surface was also measured in accordance with DIN 51130 (by the rump method) and R13 class (36 degrees slipping angle) was obtained. The anti-slip property of the anti-slip surface was further measured in accordance with DIN 51097 (by the bare foot rump method) and Class C (30 degrees slipping angle) was obtained.

### Example 10:

A second composition was prepared as in the Example 8.

Said second composition was applied by spray coating on an opaque glaze surface (which corresponds to a surface of a first layer formed from a first composition) on a sanitary shower tray to form a multi-layered structure (100) with an application amount of 10 g/m², and fired. The firing was performed at a top temperature of 1200°C, and with a total firing time of 14 hours, together with a comparative item. The comparative item was a portion of the same shower tray, which is not provided with the second composition.

The (anti-slip) surface of the second layer obtained from the second composition had a matt optical appearance. The anti-slip surface of the multi-layered item corresponds to Class C when measured according to DIN 51097 (by the rump method).

### Example 10-1:

A second composition (here: ink) is obtained with a method as exemplified in the Example 1. Such ink was applied by an inkjet printer on a glossy glaze surface (which corresponds to a surface of a first layer formed from a first composition) on a wall tile to form a multi-layered structure (100), and fired. The application was performed with an application amount of 24 g/m². The firing was performed at a top temperature of 1140°C, and with a total firing time of 55 min cold to cold, together with a comparative item. The comparative item was a portion of the same wall tile which is not provided with the second composition. After firing, the regions where the ink was applied had a satin surface finish.

### Example 10-2:

A second composition (here: ink) is obtained with a method as exemplified in the Example 1. Such ink was applied by an inkjet printer on a satin glaze surface (which corresponds to a surface of a first layer formed from a first composition) on a wall tile to form a multi-layered structure (100), and fired. The application was performed with an application amount of 48 g/m². The firing was performed at a top temperature of 1140°C, and with a total firing time of 55 min cold to cold, together with a comparative item. The comparative item was a portion of the same wall tile which is not provided with the second composition. After firing, the regions where the ink was applied had a matt surface finish.

### Example 13;

A second composition (here: ink) is obtained with a method as exemplified in the Example 1. Such ink was applied by an inkjet printer on a glossy glaze surface (which corresponds to a first layer formed from a first composition) on a porcelain tile to form a multi-layered structure (100), and fired. The application was performed with a different application amount of 20 g/m². The firing was performed at a top temperature of 1200°C, and with a total firing time of 60 min cold to cold, in an industrial furnace, together with a comparative item. The comparative item was a portion of the same tile which is not provided with the second composition. After firing, the regions where the ink was applied had a satin surface finish.

### Example 14:

Geopolymer powder obtained as described in the Example 0, was wet milled (here: wet ball milling is used as an example to wet milling) to obtain a second composition as an anti-slip composition. In said wet milling, an ester based solvent was used as an exemplary liquid carrier, which could be selected from organic and inorganic liquids/solvents. The wet milling was proceeded until an average particle size of about 4 micrometers is achieved. The output of the wet ball milling was mixed with zircon powder. Said mixing was performed using an additional liquid carrier (e.g. an organic or inorganic solvent) at a geopolymer powder / zircon weight ratio of 80:20. Then, this mixture was transferred to a nanomill (Labstar from Netsczh, Germany) for further milling down to a D₉₉ particle size of 1 micrometer or lower, and then sieved e.g. through a 3 micrometer sieve to obtain a second composition in the form of a geopolymer-based composite ink (e.g. with 40 wt.% of solid content).

Such ink was applied by an inkjet printer on a glossy glaze surface (which corresponds to a surface of a first layer formed from a first composition) on a porcelain tile to form a multi-layered structure (100), and fired. The application was performed with an application amount of 24 g/m². The firing was performed at a top temperature of 1200°C, and with a total firing time of 60 min cold to cold, in an industrial furnace, together with a comparative item. The comparative item was a portion of the same tile which is not provided with the second composition. After firing, the regions where the ink was applied had a satin surface finish.

### Example 15:

Geopolymer powder obtained as described in the Example 0, was wet milled (here: wet ball milling is used as an example to wet milling) to obtain a second composition as an anti-slip composition. In said wet milling, an ester based solvent was used as an exemplary liquid carrier, which could be selected from organic and inorganic liquids/solvents. The wet milling was proceeded until an average particle size of about 4 micrometers is achieved.

The output of the wet ball milling was mixed with wollastonite powder. Said mixing was performed using an additional liquid carrier (e.g. an organic or inorganic solvent) at a geopolymer powder / wollastonite weight ratio of 90:10. Then, this mixture was transferred to a nanomill (Labstar from Netsczh, Germany) for further milling down to a D₉₉ particle size of 1 micrometer or lower, and then sieved e.g. through a 3 micrometer sieve to obtain a second composition in the form of a geopolymer-based composite ink (e.g. with 40 wt.% of solid content).

Such ink was applied by an inkjet printer on a glossy glaze surface (which corresponds to a surface of a first layer formed from a first composition) on a porcelain tile to form a multi-layered structure (100), and fired. The application was performed with an application amount of 24 g/m². The firing was performed at a top temperature of 1200°C, and with a total firing time of 60 min cold to cold, in an industrial furnace, together with a comparative item. The comparative item was a portion of the same tile which is not provided with the second composition. After firing, the regions where the ink was applied had a satin surface finish.

### Example 16:

The milled powder obtained as described in the Example 2, was dried into granules e.g. by spray drying into free flowing granules. The granules were then deposited (e.g. by dry application) onto a glue provided on a matt glaze surface which corresponds to a first layer on a porcelain tile, to form a multi-layered structure (100). At least a part of the granules were thus stuck into the glue, forming a second composition (to form a second layer upon firing); and the rest of the granules were removed (e.g. by air blowing). Then the multi-layered structure (100) was fired as in the Example 1, together with a comparative item. The comparative item was a portion of the same tile which is not provided with the second composition. After firing, the second layer had a grainy (sugar-like) optical appearance.

### Example 17:

Geopolymer powder obtained as described in the Example 0, was sieved through a sieve having a sizes within the range between 100 micrometers and 1000 micrometers. The sieved powder was then deposited (e.g. by dry application) onto a glue provided on a glossy glaze surface which corresponds to a first layer on a porcelain tile, to form a multi-layered structure (100). At least a part of the granules were thus stuck into the glue, forming a second composition (to form a second layer upon firing); and the rest of the granules were removed (e.g. by air blowing). Then the multi-layered structure (100) was fired as in the Example 1, together with a comparative item. The comparative item was a portion of the same tile which is not provided with the second composition. After firing, anti-slip outer surface of the second layer was polished to obtain a grainy (sugar-like) optical appearance. It is witnessed that a scale of heterogeneity in the grainy appearance can be tuned over the particle size of the geopolymer powder, which can be arranged over a corresponding/respective sieve size.

Thus, at least the following objects are achieved by the present invention:
- the before mentioned shortcomings in the present state of the art are eliminated;
- a product with a high performance anti-slip surface with smooth texture is provided.

### List of reference signs used in the text and drawings:

| | | | |
|---|---|---|---|
| *1* | first composition | *1000* | multi-layered product |
| *10* | first layer | *B* | body or substrate |
| *2* | second composition | *P* | plastic deformation zone |
| *20* | second layer | *T1* | first temperature |
| *21* | buckle | *T2* | second temperature |
| *23* | dot or droplet | *T3* | third temperature |
| *24* | mound | *T4* | fourth temperature |
| *241* | particle | *T-end* | end of plastic deformation zone |
| *242* | uncoated zone | *interval (I)* | first interval |
| *100* | multi-layered structure | *interval (II)* | second interval |

## Claims

1. A multi-layered ceramic product having a sintered first layer (10) and a buckled or mounded second layer (20) integrated on top of the first layer (10), wherein the second layer (20) is obtained from a geopolymer and/or a zeolite powder.

2. The ceramic product according to the claim 1, wherein said first layer (10) is a glaze layer.

3. The ceramic product according to the claim 1, wherein said first layer (10) is an engobe layer.

4. The ceramic product according to any one of the claims 1 to 3, wherein the first layer (1) comprises a ceramic material.

5. The ceramic product according to any of claims 1 to 4, wherein the second layer (20) further comprises one or more water insoluble component in the form of powder, said component is selected from the list consisting of oxides, hydroxides, salts, and mixtures thereof.

6. Use of a composition comprising one or more geopolymer and/or zeolite in coating of a ceramic-based substrate for obtaining an item with a buckled or mounded second layer thereon.

7. The use according to the claim 6, wherein the composition is arranged to further include one or more water insoluble component in the form of powder, said component being selected from a list consisting of oxides, hydroxides, salts and mixtures thereof.

## Patentansprüche

1. Mehrschichtiges Keramikprodukt mit einer gesinterten ersten Schicht (10) und einer knittrigen oder buckligen zweiten Schicht (20), die auf der ersten Schicht (10) integriert ist; wobei die zweite Schicht (20) aus einem Geopolymer und/oder einem Zeolithpulver erhalten ist.

2. Keramikprodukt nach Anspruch 1, wobei die erste Schicht (10) eine Glasurschicht ist.

3. Keramikprodukt nach Anspruch 1, wobei die erste Schicht (10) eine Engobeschicht ist.

4. Keramikprodukt nach einem der Ansprüche 1 bis 3, wobei die erste Schicht (1) ein Keramikmaterial umfasst.

5. Keramikprodukt nach einem der Ansprüche 1 bis 4, wobei die zweite Schicht (20) ferner eine oder mehrere wasserunlösliche Komponenten in Form eines Pulvers umfasst, wobei die Komponente aus der Liste ausgewählt ist, die aus Oxiden, Hydroxiden, Salzen und Mischungen davon besteht.

6. Verwendung einer Zusammensetzung, die ein oder mehrere Geopolymere und/oder Zeolithe umfasst, beim Beschichten eines Substrats auf Keramikbasis, um einen Gegenstand mit einer knittrigen oder buckligen zweiten Schicht darauf zu erhalten.

7. Verwendung nach Anspruch 6, wobei die Zusammensetzung so angeordnet ist, dass sie ferner eine oder mehrere wasserunlösliche Komponenten in Form eines Pulvers enthält, wobei die Komponente aus einer Liste ausgewählt ist, die aus Oxiden, Hydroxiden, Salzen und Mischungen davon besteht.

## Revendications

1. Un produit céramique multicouche ayant une première couche frittée (10) et une deuxième couche (20) vallonnée ou froissée, intégrée au-dessus de la première couche (10), dans lequel la deuxième couche (20) est obtenue à partir d'une poudre de géopolymère et/ou zéolite.

2. Produit céramique selon la revendication 1, dans lequel ladite première couche (10) est une couche de glaçure.

3. Produit céramique selon la revendication 1, dans lequel ladite première couche (10) est une couche d'engobe.

4. Produit céramique selon l'une quelconque des revendications 1 à 3, dans lequel la première couche (1) comprend un matériau céramique.

5. Produit céramique selon l'une quelconque des revendications 1 à 4, dans lequel la deuxième couche (20) comprend en outre un ou plusieurs composants insolubles dans l'eau sous forme de poudre, ledit composant étant choisi parmi la liste constituée d'oxydes, d'hydroxydes, de sels et de mélanges de ceux-ci.

6. Utilisation d'une composition comprenant un ou plusieurs géopolymères et/ou zéolite dans le revêtement d'un substrat à base de céramique pour obtenir un article avec une deuxième couche vallonnée ou froissée sur celuici.

7. Utilisation selon la revendication 6, dans laquelle la composition est agencée pour inclure en outre un ou plusieurs composants insolubles dans l'eau sous forme de poudre, ledit composant étant choisi parmi une liste constituée d'oxydes, d'hydroxydes, de sels et de mélanges de ceux-ci.
